# EUROPEAN PATENT SPECIFICATION

(11) **EP 3 467 956 B1**
(45) Date of publication and mention of the grant of the patent: **24.01.2024**
(21) Application number: 18190571.2
(22) Date of filing: 23.08.2018
(51) Int. Cl.: H01R 13/62, H01R 24/86, H01R 11/30, H01R 13/629, B64D 11/06, H01R 13/24, H01R 13/512, H01R 13/66, H01R 24/38, H01R 31/06, B64D 11/00

(54) **ELECTRICAL CONNECTOR**
ELEKTRISCHER ANSCHLUSS
CONNECTEUR ÉLECTRIQUE

(30) Priority: 23.08.2017 US 201762549203 P; 01.05.2018 NZ 18742100
(43) Date of publication of application: 10.04.2019
(60) Divisional application: 23218243.6
(73) Proprietor: Amphenol Phitek Limited, 0123 Auckland (NZ)
(72) Inventor: MUTTON, David, Huntly (NZ); DIAZ, Randy M., Somerville Auckland 2014 (NZ)
(74) Representative: Dehns

(56) References cited:
- EP-A1- 2 628 213
- EP-A1- 2 720 324
- EP-A2- 1 831 972
- EP-B1- 2 128 936
- EP-B1- 2 628 213
- WO-A1-2017/001755
- CN-A- 106 505 363
- US-A1- 2014 287 601
- US-A1- 2016 020 553
- US-A1- 2016 093 975
- US-A1- 2017 062 999

## Description

### Field

This invention relates to an electrical connector socket. The invention is directed to an electrical connector socket for making electrical connection between a media source and media delivery equipment, for example, an audio signal connection between apparatus such as a headset and an audio signal source such as that provided by an in-flight entertainment system.

### Background

Conventional connectors typically comprise a socket, and a plug which is received in the socket. For example, in an airline cabin, an in-flight entertainment system may provide media such as audio and video information to passenger seat locations, so that it is available to passengers. The video information is typically made available via a visual display unit located on the rear of a seat immediately in front of the passenger. Audio information is typically provided via a connector socket (sometimes referred to as a jack) which is provided adjacent to the seat, for example, in the arm rest. The user is typically provided with a headset which has a plug which is received in the socket, so that the audio information is delivered to the headset.

A problem can occur when tension is applied to the headset plug. If the tension is applied in a direction so as to pull the plug axially from the socket, then no damage will usually occur. However, if tension is supplied in a direction other than the axial direction, such as a perpendicular direction, then breakage may occur. This is because the plug typically includes one or more elongate pins which are received in the socket. Unless the plug pins are removed in an axial direction, there is a risk that the plug pins can break. This is often a problem within aircraft cabins, since a headset, or headset cable, can frequently be moved unintentionally. One example is a situation in which a passenger forgets that the headset is still being worn and rises from their seat, causing the headset cable to violently pull the plug from the socket. Another example is when an object is being moved in the vicinity of the seat, for example, a pillow or food tray which may catch on the headset cable, causing the plug to be torn from the socket.

A connector apparatus which goes at least some way to addressing the above problems is described in USSN 13/337,117. According to particular arrangements described therein, electrical connection may be effected by means of conductors (preferably contact pins) which engage with conductor contact regions (preferably formed by a conductive layer on a housing of a socket). Magnets may be used to releasably secure a plug in a socket so as to maintain the connection during normal use but allow for disconnection, including in the abovementioned circumstances.

While the arrangements described in USSN 13/337,117 provide significant advantages over prior arrangements, there is a continued need for further improvements in the integrity of the connection as well as in avoiding possible failures or improving safety.

EP 2628213 (Schneider Electric Industries Sas) discloses an electrical plug and base adapted to collaborate in a removable manner. Magnetic control means position and hold the plug on the base so that annular tracks of the plug are in contact with electrical contacts of the base. This EP document discloses the preamble of claim 1.

US 2016/020553 (Little; FoxConn Interconnect Technology Limited) discloses an assembly including a first device having a first mating areas including magnets and conductive pads, and a second device having a second mating area including corresponding magnetic elements and LGA contacts.

US 2014/287601 (Suh; Samsung Electronics Co.) discloses a magnetic connection device having two pluralities of electrodes and an elastic member for elastically supporting the plurality of second electrodes.

WO 2017/287601 (Gulplug) discloses an electrical plug and socket assembly having electrical contacts and a magnetic portions arranged to move the electrical contacts by magnetic attraction.

US 2016/093975 (Katiyar et al.; Apple Inc) discloses a magnetic connector having a magnetic pin having a plunger that may remain protected in a barrel and housing when the magnetic connector is not engaged with a corresponding connector.

CN 106505363 (Shenzhen Pomagtor Prec Electronics Co) discloses a magnetic electrode button which comprises a magnetic electrode button male seat and a magnetic electrode button female seat, wherein the magnetic electrode button male seat and the magnetic electrode button female seat can be connected together through magnetic attraction.

US 2017/062999 (Thiers) discloses a rotatable connector port including an alignment feature and two or more conductive traces corresponding to contacts of a dock interface.

### Object of the invention

It is therefore an object of the present invention to provide a connector apparatus which overcomes or ameliorates at least one disadvantage of the prior art, or alternatively to provide the public with a useful choice.

Further objects of the invention will become apparent from the following description.

### Disclosure of the invention

The scope of protection is defined by the accompanying claims.

According to the invention, an electrical connector socket is provided according to claim 1, and an electrical coupling system as claimed in claim 8. Further optional embodiments are present in respective dependent claims.

Preferably, the magnetic member and the resilient member are configured such that the magnetic attraction force surmounts the restoring force when the plug and the electrical connector socket are coupled.

The electrical connector includes a locating pin protruding from the front face. The locating pin may be configured to mechanically match with a corresponding second locating feature of the plug.

Preferably, the locating pin includes an annular notch configured to interact with a mating clip means of the receiving means to enhance the mechanical connection between the electrical socket and the corresponding plug.

Preferably, the locating pin is rigidly mounted to a partition member of the housing, wherein the mounting assembly is arranged between the partition member and the front face, and wherein the locating pin protrudes through a bore in the mounting assembly and through a hole in the front face.

Preferably, the resilient member includes a helical spring and the locating pin is substantially coaxially aligned in a centre portion of said helical spring.

Preferably, the resilient member includes a piece of foamy and/or rubber material, wherein the locating pin is substantially coaxially aligned in a bore portion of said piece of foamy and/or rubber material.

Preferably, the magnetic member includes an annular magnet substantially coaxially aligned with said resilient member.

Preferably, the magnetic member includes an annulus of ferromagnetic material substantially coaxially aligned with said resilient member.

Preferably, the magnetic member includes a plurality of individual magnetic sub-members.

Preferably, the individual magnetic sub-members are circumferentially arranged in a magnet holder around an opening in the magnet holder.

Preferably, the individual magnetic sub-members are arranged in two groups of different magnetic polarity.

Preferably, the individual magnetic sub-members are arranged in the two groups in a ratio of one to three.

Preferably, each connector pin protrudes through the front face at a unique distance from the first locating feature.

Preferably, the front face includes a raised edge delimiting a raised surface protruding from the front face.

Preferably, the raised edge is configured to mate with a corresponding raised rim of the plug to align the electrical connector socket and the plug.

Preferably, the raised edge is circular and the locating pin is arranged centrally of the raised surface.

Preferably, the at least one opening corresponding to the least one connector pin is arranged in the raised surface.

Preferably, each of the at least one corresponding openings corresponds to a single one of the at least one connector pins.

Preferably, the electrical connector socket further includes a conductor port configured to be electrically connected with a conductor, the conductor port having at least one connecting terminals electrically coupled to individual connector pins in order to establish electrical contact between the connector pins and conductor strings of the conductor.

Preferably, the electrical connector socket further includes a conductor electrically coupled to the at least one connector pin inside the housing and extending outside the housing, the conductor including a connector port at an end of the conductor distal to the housing.

Preferably, the connector port is configured to transfer electrical and/or electromagnetic signals.

Preferably, the connector port is configured to transfer analog and/or digital data and/or electrical power.

Preferably, the connector port is one of an analog audio connector port, a universal serial bus (USB) connector port, a high-definition multimedia interface (HDMI) connector port, or a Firewire connector port.

Preferably, the connector port is a female or receptacle port.

Preferably, the connector port is a male or plug port.

Preferably, the at least one connector pin is configured to establish electrical contact with at least one corresponding contact area of the plug.

Preferably, the mounting assembly includes a printed circuit board (PCB).

Preferably, the printed circuit board (PCB) is a finger flex thin PCB or a rigid PCB.

Preferably, the at least one connector pin is a surface mount connector pin mounted to the PCB, preferably a surface mount pogo pin.

According to another aspect, the invention provides an electrical coupling system an electrical connector plug as claimed in claim 8.

The coupling face further includes a second locating feature configured to mechanically match with a corresponding first locating feature of the socket.

Preferably, the second locating feature includes a receiving means in the plug-side coupling face.

Preferably, the second locating feature includes a clip means configured to interact with a mating annular notch of the corresponding first locating feature of the socket to enhance the mechanical connection.

Preferably, the second locating feature includes a bore or recess extending through the plug-side coupling face wherein the clip means is an annular clip means.

Preferably, the plug-side magnetic member includes an annular magnet.

Preferably, the plug-side magnetic member includes an annulus of ferromagnetic material.

Preferably, the plug-side magnetic member includes a plurality of individual magnetic plug-side sub-members.

Preferably, the individual plug-side magnetic sub-members are circumferentially arranged.

Preferably, the individual plug-side magnetic sub-members are arranged in two groups of different magnetic polarity.

Preferably, the individual plug-side magnetic sub-members are arranged in the two groups in a ratio of one to three.

Preferably, each of the at least one contact area has the shape of an annulus.

Preferably, the electrical connector plug comprises at least two contact areas, wherein the contact areas are substantially concentrically arranged around the second locating means.

Preferably, the coupling face is substantially circular.

Preferably, the coupling face includes a raised rim delimiting the coupling face, and the second locating feature is substantially centrally arranged on or in the coupling face.

Preferably, the raised rim is configured to mate with a corresponding raised edge of the socket to align the electrical connector plug and the socket.

Preferably, the electrical connector plug further includes a plug-side printed circuit board (PCB) configured to be connected with a plug-side conductor, the plug-side printed circuit board having at least one connecting terminal electrically and individually coupled to the at least one contact area in order to establish electrical contact between the at least one contact area and conductor strings of the plug-side conductor.

Preferably, the electrical connector plug further includes a plug-side conductor electrically coupled to the at least one contact area inside the plug housing, and including a plug-side connector port at an end of the plug-side conductor distal to the plug housing.

Preferably, the plug-side connector port is configured to transfer electrical and/or electromagnetic signals.

Preferably, the plug-side connector port is configured to transfer analog and/or digital data and/or electrical power.

Preferably, the plug-side connector port is one of an analog audio connector port, a universal serial bus (USB) connector port, a high-definition multimedia interface (HDMI) connector port, or a Firewire connector port.

Preferably, the plug-side connector port is a female or receptacle port.

Preferably, the plug-side connector port is a male or plug port.

Preferably, the plug-side conductor is a extending at least partially outside the plug-side housing, and the plug-side connector port is movable relative to the plug-side housing.

Preferably, the plug-side connector port is at least partially integrated in the plug-side housing.

An entertainment system, preferably an in-flight entertainment system, may include an audio signal source and a headset, the audio signal source comprising an electrical connector socket as defined above and the headset comprising an electrical connector plug, wherein an audio and/or video signal is transferred from the audio signal source to the headset the via the electrical connector socket and the electrical connector plug.

### Drawing Description

A number of embodiments of the invention and examples will now be described, as well as certain arrangements which are described for reference purposes only, with reference to the drawings in which
- **Figure 1**: shows a spatial view of an electrical connector socket and an electrical connector plug according to an embodiment of the invention.
- **Figure 2**: shows a sectional side view of an electrical connector socket and an electrical connector plug according to an example.
- **Figure 3**: shows an exploded view of an electrical connector socket and an electrical connector plug according to an example.
- **Figure 4**: shows an arrangement, described for reference purposes only, of an electrical connector socket in a rest position and in a coupling position, respectively.
- **Figure 5**: shows a sectional side view of an alternative example of an electrical connector socket and an electrical connector plug.
- **Figure 6**: shows an exploded view of an alternative arrangement, described for reference purposes only of an electrical connector socket and an electrical connector plug.
- **Figure 7**: shows a top view of an electrical connector socket and a bottom view of an electrical connector plug described for reference purposes only.
- **Figure 8**: shows a spatial view of an electrical connector socket and of an electrical connector plug according to an embodiment the invention, as well as an exploded view and a bottom view of the respective electrical connector plug.
- **Figure 9**: shows a top view of an electrical connector socket and a bottom view of an electrical connector plug as well as a sectional side view of the electrical connector socket and the electrical connector plug according to an embodiment the invention.
- **Figure 10**: shows a top view of an electrical connector socket and a bottom view of an electrical connector plug as well as a sectional side view of the electrical connector socket and the electrical connector plug according to an embodiment the invention.
- **Figure 11**: shows an exploded view of an electrical connector socket and an electrical connector plug according to the invention.
- **Figure 12**: shows a magnetic member of the electrical connector socket shown in Figure 11.
- **Figure 13**: shows a sectional side view of the electrical connector socket shown in Figure 11 and an electrical connector plug according to the invention.

### Detailed description

Those skilled in the art will appreciate that the words "socket" or "jack", and "plug" are used for the purposes of convenience, since the connection apparatus and system described in this document comprises components which may not conform to the traditional definition of a socket, jack or plug. Instead, the terms "socket" and "jack" are used to refer generally to a connector component which is connected to a communication system or a media delivery device or system for example, and the term "plug" is used to refer to a connector component which is typically attached to a device used by a user, such as a headset for example.

Although the embodiments discussed below are referred in the context of audio delivery apparatus such as headsets and headphones, the invention is not intended to be limited to that application. Therefore, it should be appreciated that the invention is applicable to connector apparatus in general, and includes within its scope connector apparatus for use in communication systems such as "SKYPE" headsets and/or mobile telephone connection devices and/or MP3 media delivery device charging interfaces or connectors amongst other various applications.

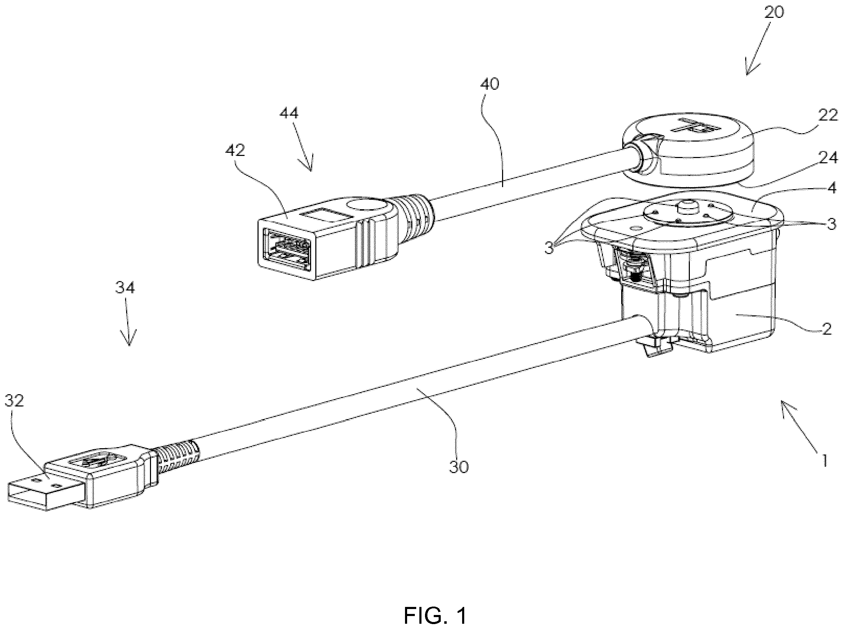

Figure 1 shows an electrical connector socket 1 according to an embodiment of the invention. The connector socket 1 includes a housing 2 having a front face 4 configured to mate with a corresponding face 24 of a corresponding plug 20. The connector socket 1 and the plug 20 together form an electrical coupling system which can be used, according to an aspect of the invention, in an in-flight entertainment system to connect a data and/or audio signal source (not shown) and a headset (not shown) used by a passenger. In certain embodiments, the audio signal source comprises or is connected to the electrical connector socket 1 and the headset comprises or is connected to the electrical connector plug 20. In this arrangement, an audio and/or video signal is transferred from the audio signal source to the headset via the electrical connector socket 1 and the electrical connector plug 20.

In the embodiment depicted in Figure 1, the electrical connector socket 1 further includes a conductor 30 extending outside the housing for mounting the socket in places remote from the signal source, e.g. in an arm rest of a passenger seat of a vehicle. In the embodiment of Figure 1, the conductor 30 is a cable. In other embodiments, the conductor could also be rigid and/or include optical fibres or the like. The conductor 30 includes a connector port 32 at an end 34 of the conductor 30 distal to the electrical connector socket 1.

It is to be understood that the shown embodiment represents one of several alternatives to connect the connector socket 1 to the data and/or audio signal source. In the shown embodiment, the connector port 32 a universal serial bus (USB) connector port. In other embodiments, the connector port 32 is an analog audio connector port, a high-definition multimedia interface (HDMI) connector port, or a Firewire connector port, to mention only a few alternatives.

In the embodiment shown in Figure 1, the connector port 32 is a male or plug port, but in other embodiments, the connector port 32 is a female or receptacle port.

The electrical connector plug 20 shown in Figure 1 comprises a plug housing 22 having a coupling face 24 configured to mate with the corresponding face 4 of the corresponding electrical connector socket 1. In this embodiment, the electrical connector plug 20 includes a plug-side conductor 40 including a plug-side connector port 42 at an end 44 of the plug-side conductor 40 distal to the plug housing 22.

Similar to what has been stated above, the shown embodiment represents merely one of several alternatives and, while the plug-side connector port 42 is shown to be a universal serial bus (USB) connector port, other embodiments of the plug-side connector port 42 encompass an analog audio connector port, a high-definition multimedia interface (HDMI) connector port, a Firewire connector port, or another alternative connector port.

In the embodiment shown in Figure 1, the plug-side connector port 42 is a male or plug port, but embodiment are envisaged where the plug-side connector port 42 is a female or receptacle port.

As will be appreciated, depending on the specific configuration of the connector port 32 and the plug-side connector port 42 as outlined above, both the connector port 32 and the plug-side connector port 42 are configured to transfer electrical and/or electromagnetic signals and are configured to transfer analog and/or digital data and/or electrical power.

As can be seen in Figure 1, the electrical connector socket 1 includes five connector pins 3 at the front face 4. As will be appreciated, the exact number of connector pins 3 is not limited to this example and may vary broadly depending on the specific application. In particular, in some embodiments, the connector socket 1 includes more or less than five connector pins, and may, for instance, include four or six connector pins 3.

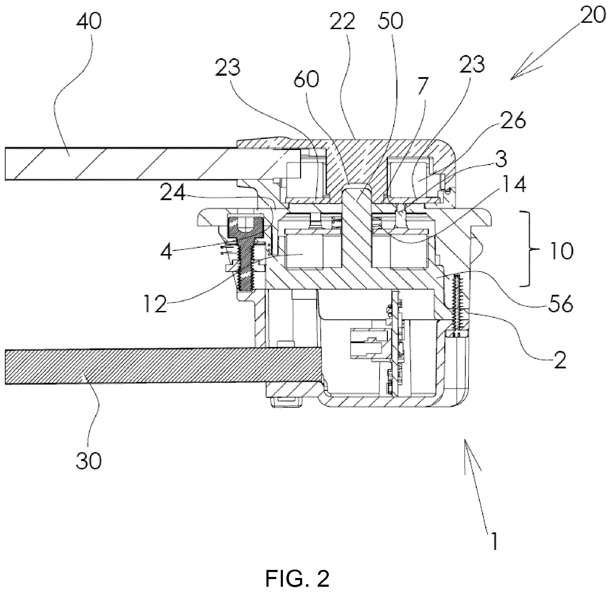

As can best be seen in Figure 2, the connector pins 3 mate with corresponding contact areas 23 distributed over the coupling face 24 and electrically isolated from each other. The electrical contact areas 23 are configured to establish electrical contact with the corresponding connector pins 3 of the socket. In the example shown, the electrical plug 20 includes four contact areas 23.

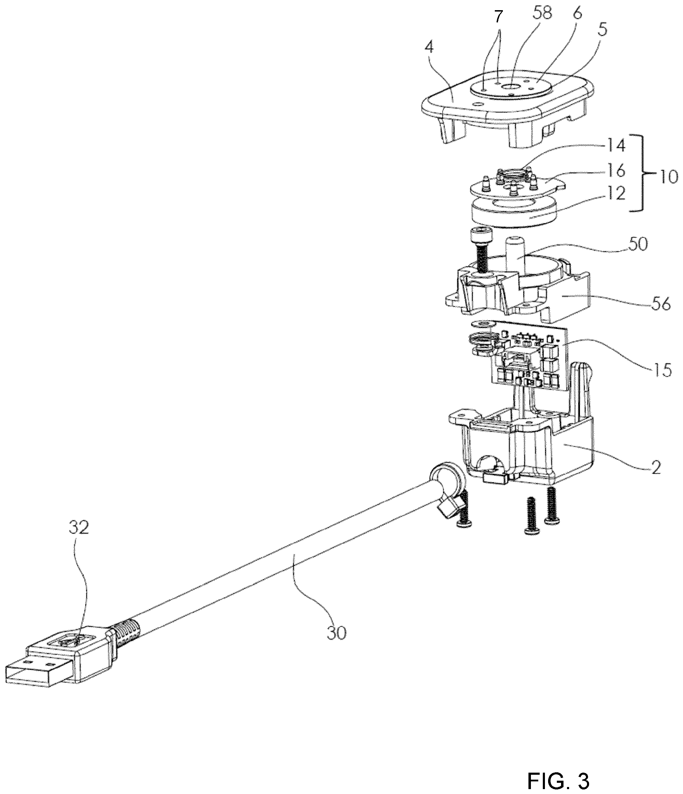

As shown in more detail in Figure 3, the connector pins 3 are mounted on a mounting assembly 10 inside the housing 2, the mounting assembly 10 being movable in a direction substantially perpendicular to the front face 4 of the housing.

The mounting assembly 10 includes a magnetic member 12 configured to interact with a corresponding plug-side magnetic member 26 of the plug 20 to establish a magnetic attraction force between them when the plug 20 is coupled to the socket 1. The magnetic attraction force urges the movable mounting assembly 10 towards the front face 4 to a coupling position in which the connector pins 3 protrude through corresponding openings 7 in the front face 4.

Figure 2 shows the movable mounting assembly 10 in coupling position. As will be appreciated, the plug-side magnetic member 26 is located in the plug housing 22 such that the magnetic attraction force urges the connector pins 3 against the corresponding electrical contact areas 23. The connector pins 3 in turn protrude through the corresponding openings 7 in the front face 4 and thus establish contact with the contact areas 23.

The features of the invention allow for a good and reliable electrical contact between the connector pins 3 and the contact areas 23 once the connector socket 1 and the plug 20 are coupled.

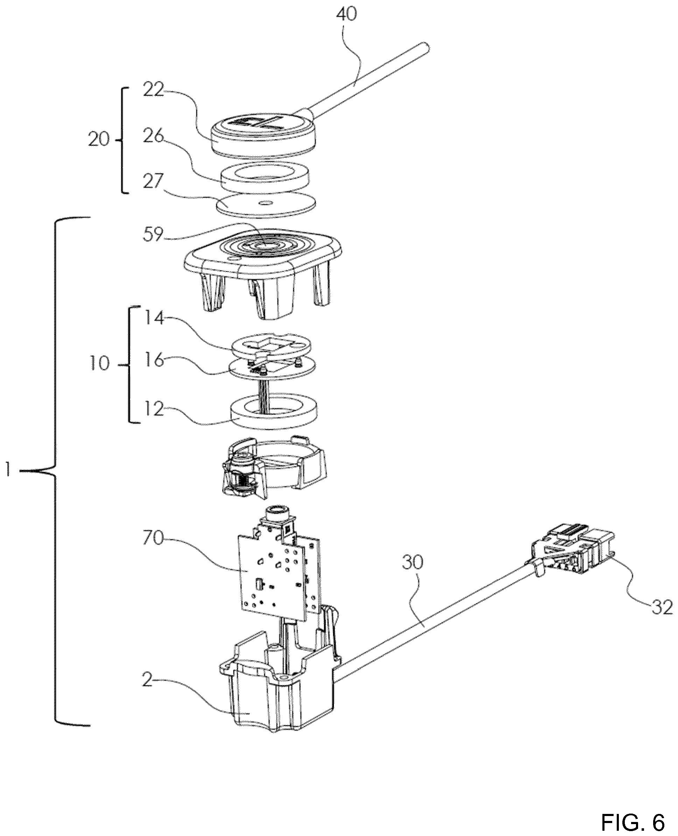

The mounting assembly 10 further includes a resilient member 14, shown in Figures 2, 3 and 5, configured to exert a restoring force on the mounting assembly 10, to urge the mounting assembly 10 towards a rest position. In the rest position, the connector pins 3 do not protrude from the front face 4 but are either flush with the front face 4 or stand back to a certain extent inside the housing 2. The resilient member 14 can include a helical spring as shown in Figures 2, 3 and 5, a piece of foamy or rubber material as shown in Figure 6, or any other suitable alternative thereto.

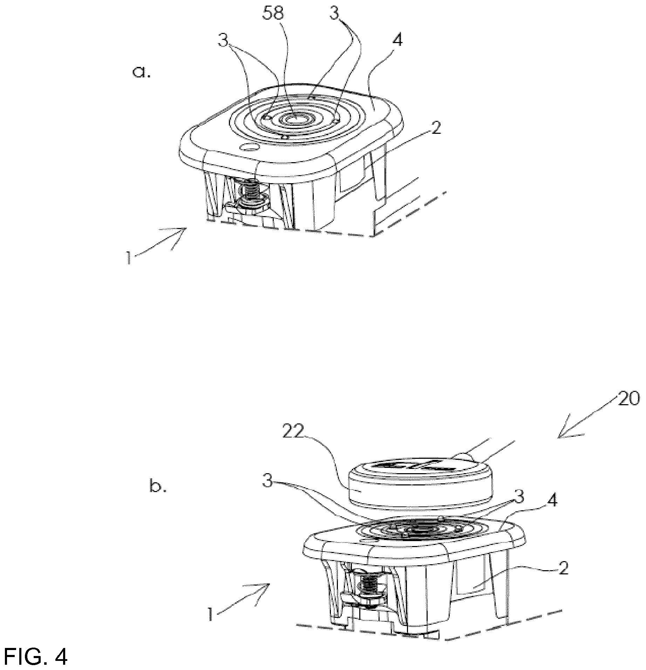

The different positions of the mounting assembly 10 can best be seen in Figure 4.

In Figure 4a, no plug 20 is present near the connector socket 1. Hence, the restoring force exerted by resilient member 14 urges the mounting assembly 10 in the rest position in which the connector pins 3 do not protrude from the front face 4.

In the state shown in Figure 4b, where a plug 20 is near the connector socket 1, the magnetic attraction force created between the magnetic member 12 and the plug-side magnetic member 26 urges the mounting assembly towards the front face 4 to the coupling position. Hence, as shown in the Figure, the connector pins 3 protrude from the front face 4 to mate and establish electrical contact with the corresponding contact areas 23 of the plug 20. It is noted that in the example of Figure 4, the socket 1 has four connector pins 3.

As will be appreciated by the skilled person, in certain embodiments, the magnetic member 12 and the resilient member 14 are configured such that the magnetic attraction force surmounts the restoring force when the plug 20 and the electrical connector socket 1 are coupled. Embodiments of the invention encompass configurations where the magnetic member 12 and the resilient member 14 are configured such that the magnetic attraction force surmounts the restoring force when a distance between the plug 20 and the electrical connector socket 1 falls below a predetermined threshold, as shown in Figure 4b where the contact pins 3 already protrude through the front face 4 although coupling between the plug 20 and the socket 1 is actually not yet achieved.

In preferred embodiments, the electrical connector 1 includes a first locating feature on the front face 4, the first locating feature being configured to mechanically match with a corresponding second locating feature arranged on the coupling face 24 of the plug 20. This mechanical connection helps to hold the socket 1 and the plug 20 in place relative to each other and helps to prevent the connector pins 3 from losing contact with the contact areas 23.

As shown in Figures 1, 2 and 3, a locating pin 50 protrudes from the front face 4 of the socket 1. The plug 20 includes a receiving means 60, see also Figure 2. In particular, as shown in Figure 2, the receiving means 60 includes a bore or recess in the coupling face 24.

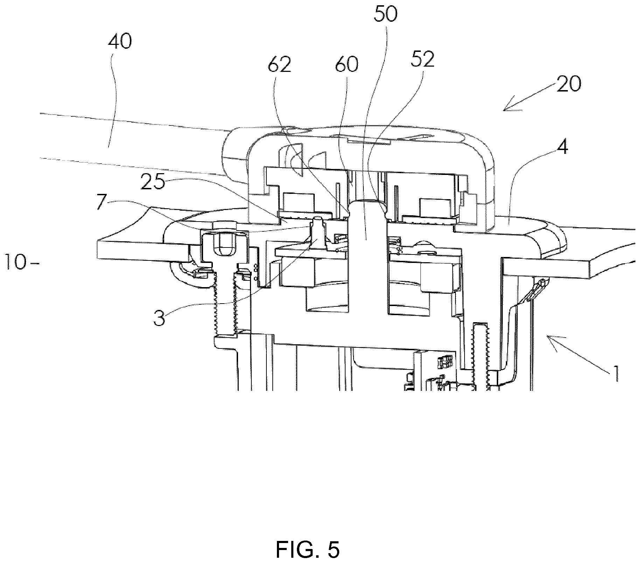

Turning to Figure 5, and in order to make the mechanical connection between the socket 1 and the plug 20 even more reliable, the locating pin 50 includes an annular notch 52 configured to interact with a mating annular clip means 62 of the receiving means 60 to enhance the mechanical connection.

As shown in Figure 2, the locating pin 50 has a smooth shaft without an annular notch 50. Accordingly, the receiving means 60 of the plug 20 might not have an annular clip means 62.

As further shown in Figures 2 and 3, the locating pin 50 is rigidly mounted to a partition member 56 of the housing 2, wherein the mounting assembly 10 is arranged between the partition member 56 and the front face 4. The locating pin 50 protrudes through the mounting assembly 10 and through a hole 58 in the front face 4.

The socket of Figures 2 and 3 furthermore features a helical spring 14 as resilient member 14. In these embodiments, the locating pin 50 is substantially coaxially aligned in a centre portion of the helical spring 14. The magnetic member 12 in turn is an annular magnet 12 which is also substantially coaxially aligned with the helical spring 14.

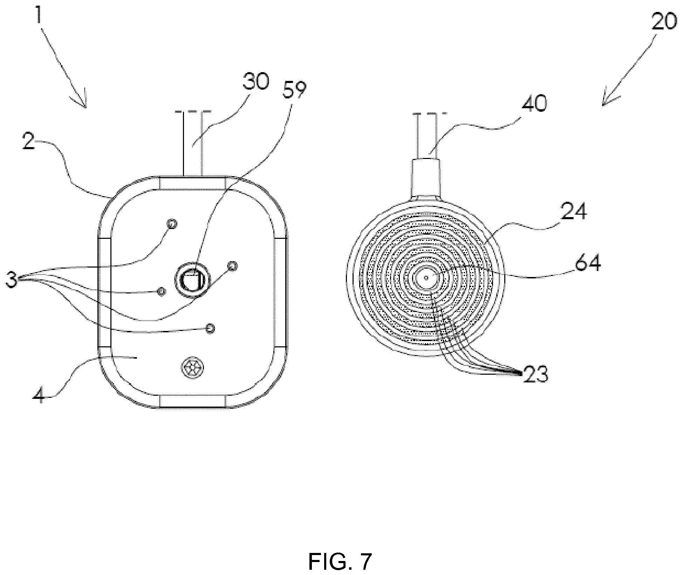

In other arrangements, described for reference purposes only, as shown in Figures 4, 6, and 7, the first locating feature includes a locating bore 59 in the front face 4 of the socket 1. In these arrangements, the corresponding second locating feature of the plug 20 is a plug-side locating pin 64 which can best be seen in Figure 7. Alternatives to the plug-side locating pin 64 in this embodiment include a spherical member protruding at least partially from the plug-side housing 2. Both the plug-side locating pin 64 and the spherical member can be elastically supported inside the plug housing 22 such that they can be pushed inside the plug housing 22 to a certain extent when a respective force is exerted. Such an arrangement can prevent breakage of the first and/or second locating feature in cases where a user is unintentionally applying stress to the connection between the socket 1 and the plug 20.

It is a particular advantage of these arrangements that the locating bore 59 can be configured to receive a standard audio plug and thus establish backwards compatibility of the connector socket 1 with previous plug standards.

For example, in the arrangement shown in Figure 6, a 3.5 inch mono or stereo audio jack or other standard audio jack (not shown) can be inserted through the locating bore 59 and plugged into an audio signal transmitter 70 coaxially aligned with the locating bore 59 to receive audio via the audio signal transmitter 70.

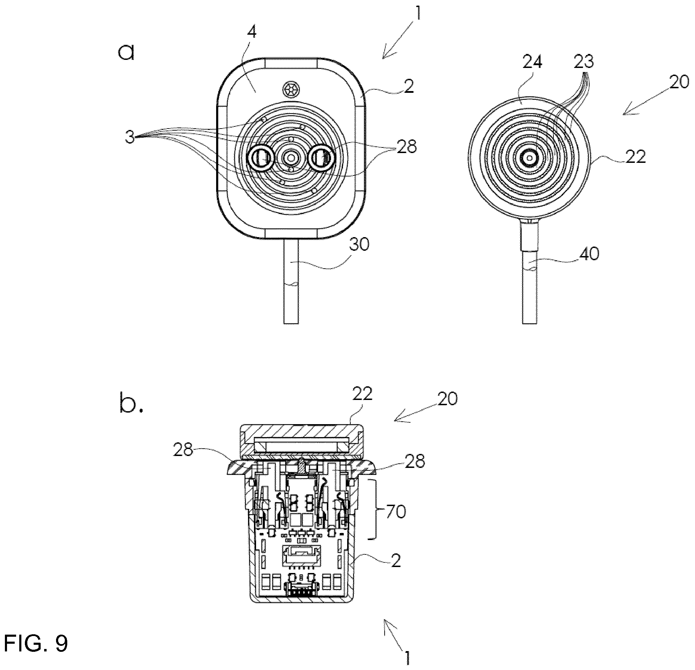

Another alternative to ensure backwards compatibility of the socket 1 is shown in Figure 9. In this embodiment, the socket 1 includes two standard ports 28 in the front face 4 which can be used in combination with a standard plug (not depicted). As can best be seen in Figure 9b, the socket 1 includes a respective audio signal transmitter 70 aligned with the standard ports 28 to transmit audio signals to the standard plug not via the connector pins 3 but via the audio signal transmitter 70.

When used with a standard plug, the mounting assembly 10 is in the rest position as no magnetic attraction force is exerted on the mounting assembly 10 in the absence of the plug-side magnetic member 26. Consequently, the connector pins 3 do not protrude from the front face 4 and there is no obstacle on the part of the socket 1 when connection is established with a standard plug via the standard ports 28. Hence, usage of a socket 1 according to this embodiment of the invention in combination with a standard plug is conveniently possible.

However, as the skilled person will appreciate in the light of Figure 9 that this backwards compatibility does not affect the interaction of the socket with the inventive plug 20.

As shown in Figures 1 and 7, independently from the design of the first locating feature, each connector pin 3 of the connector socket 1 protrudes through the front face 4 at a unique distance from the first locating feature. As can be seen in Figure 7, the corresponding contact areas 23 of the plug 20 have the shape of concentrically arranged annuli with radii to match the unique distances of the corresponding connector pins 3. In other words, the connector pins 3 are configured to establish electrical contact with the corresponding contact areas 23 of the plug 20. That said, in the arrangement shown in Figure 7, there are four connector pins 3 on the front face 4 of the socket 1 and six potential contact areas 23 on the coupling face 24 of the plug. This means that in the shown arrangement, only four contact areas 23 receive signals from corresponding connector pins 3 when the socket 1 and plug 20 are coupled.

Figure 7 shows a substantially circular coupling face 24, but the coupling face 24 can basically have any shape.

As shown in Figures 3 and 5, the front face 4 of the socket 1 includes a raised edge 5 delimiting a raised surface 6 protruding from the front face 4. The raised edge 5 is configured to mate with a corresponding raised rim 25 of the plug 20 which raised rim 25 delimits the coupling face 23 of the plug 1. This configuration offers a simple and reliable way to help align the electrical connector socket 1 and the plug 20, to reduce stresses acting on the first and second locating features, and to help establish a reliable connection between the connector pins 3 and the contact areas 23. In the shown embodiments, the raised edge 5 is circular and the first locating pin 50 is arranged centrally of the raised surface 6.

As further shown in Figure 5, the openings 7 corresponding to the connector pins 3 are arranged in the raised surface 6. Moreover, each of the openings 7 corresponds to a single one of the connector pins 3, which is also the case in embodiments in which the front face 4 does not exhibit a raised surface 6, as can be seen in Figures 4 and 7, respectively.

Turning to Figure 3, the electrical connector socket 1 further includes a conductor port 15 configured to be electrically connected with the conductor 30. In the present embodiment, the conductor port 15 has at least five connecting terminals (not shown) electrically coupled to individual connector pins 3 in order to establish electrical contact between the connector pins 3 and conductor strings (not shown) of the conductor 30.

As will be understood in light of Figure 3, the mounting assembly 10 includes a printed circuit board (PCB) 16 electrically interconnected between the conductor port 15 and the individual connector pins 3. The printed circuit board 16 can be of any suitable type, for example a finger flex thin PCB or a rigid PCB.

In the Figures, the connector pins 3 are shown to be surface mount pogo pins 3 mounted to the PCB 16, but could be of any type of surface mount connector pins or connector pins in general.

As can best be seen in Figure 6, the electrical connector plug 20 may further include a plug-side printed circuit board (PCB) 27 configured to be connected with a plug-side conductor 40, the plug-side printed circuit board 27 having at least one, preferably at least four connecting terminals (not shown) electrically coupled to individual contact areas 23 in order to establish electrical contact between the contact areas 23 and conductor strings (not shown) of the plug-side conductor 40.

In the embodiment shown in Figure 1, the conductor 40 is a cable extending at least partially outside the plug-side housing 22, and the connector port 42 is movable relative to the plug-side housing 22.

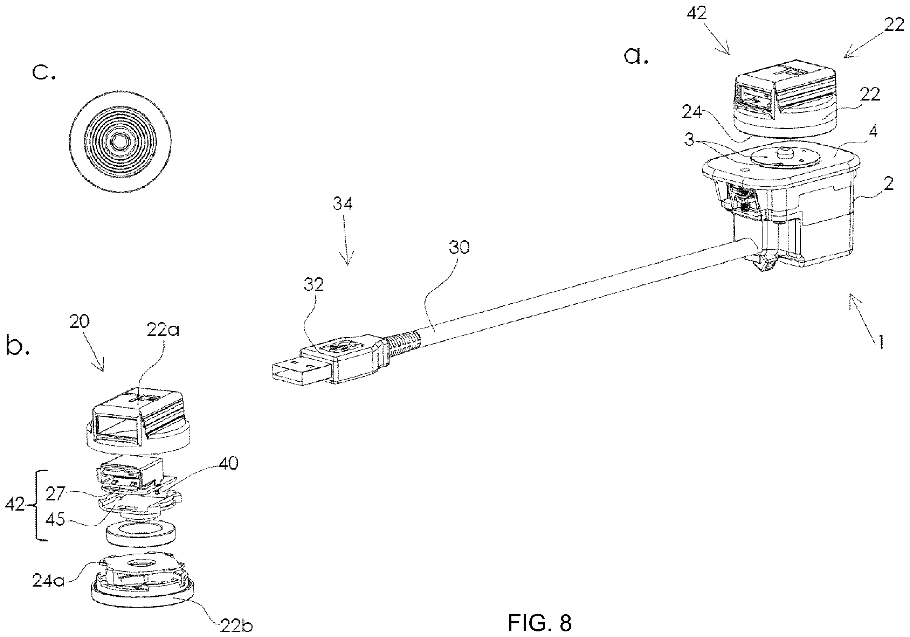

In the embodiment of Figure 8 however, the connector port 42 forms an integral part of the plug-side housing 22. As will be appreciated in light of Figure 8a, the plug 20 is rotationally orientable about the socket 1 due to the circular-concentric set up of the front face 4, the coupling face 24, and the first and second locating features. In the present case, the plug housing 22 consists of a first part 22a and a second part 22b connectable thereto. As shown in Figure 8b, the first 22a and second part 22b of the plug housing 22 sandwich parts of the surface-mount plug-side connector port 42 including the printed circuit board 27 and the plug-side magnetic member 26. The plug-side conductor 40 forms part of the surface mount plug-side connector port 42.

The plug-side connector port 42 furthermore includes an adapter plate 45 configured to connect to the contact areas 23 and to hold the plug-side magnetic member 26 in place. The contact areas 23, also shown in Figure 8c, are arranged on a carrier 24a which together with parts of the second part 22b of the plug housing 22 forms the coupling face 24.

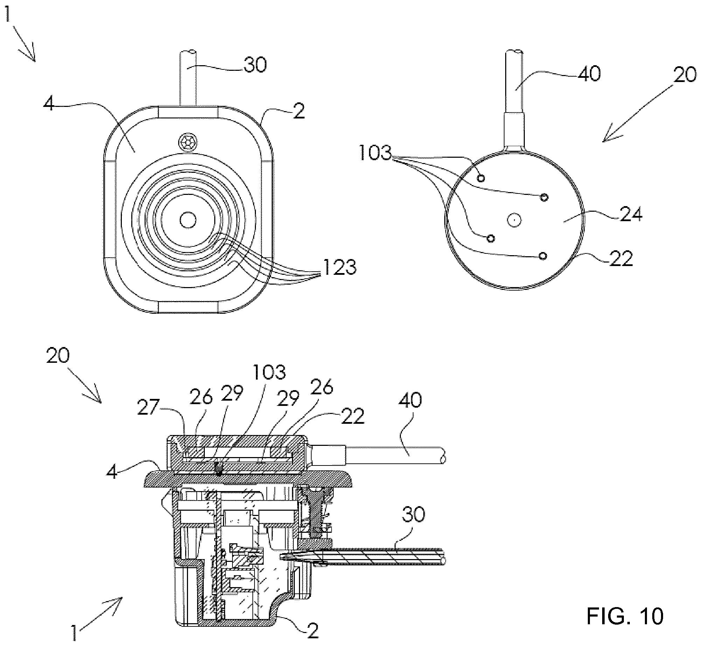

The skilled person will appreciate in the light of Figure 10 that other embodiments of the invention feature a socket 1 having socket-side contact areas 123 on the front face 4 thereof and a plug 20 the coupling face 4 of which exhibits plug-side connector pins 103. In specific embodiments, a plug-side magnetic member 26 may be used to interact with a plug-side resilient member 29 and corresponding features of the plug 1 to move the plug-side PCB 27 between a coupling position and a rest position in the plug housing 22 of the plug 20 according to the principles laid open in the above.

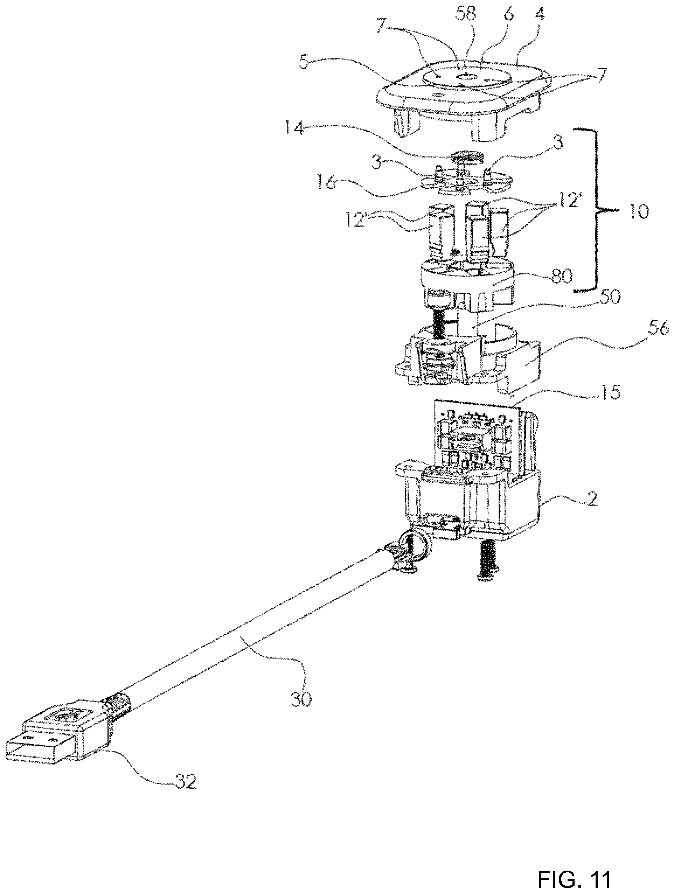

In certain embodiments, as shown in Figures 11 to 13, respectively, the magnetic member 12 includes a plurality of individual magnetic sub-members 12'. This arrangement can be applied, for example, to achieve a higher magnetic attraction force between the socket 1 and the plug 20.

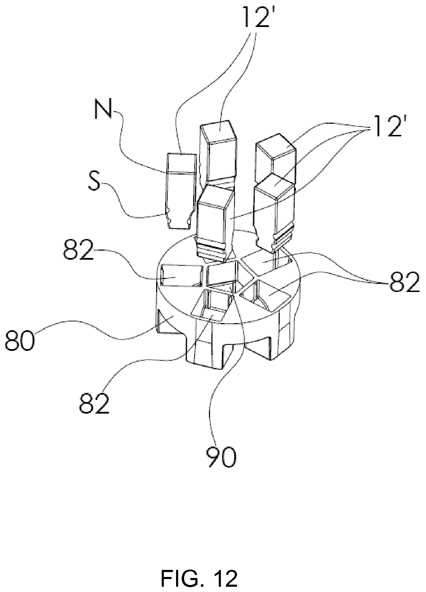

In the depicted embodiment, five individual magnetic sub-members 12' are circumferentially arranged in and fixedly attached to, a magnet holder 80, which is preferably made of magnetically non-conductive material and exhibits corresponding receptacles 82 to accommodate the magnetic sub-members 12'. In the present embodiment and as best shown in Figure 12, five magnetic sub-members 12' are evenly distributed along a perimeter of the socket 1 in a generally star-shaped arrangement.

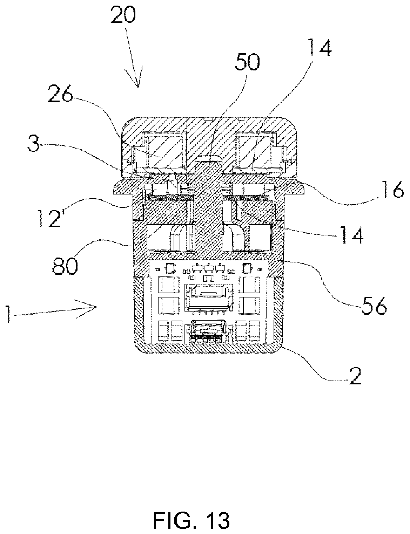

As best shown in Figure 13, the magnet holder 80 carries the PCB 16 with connector pins 3 mounted thereon. Resilient member 14, PCB 16, magnet holder 80 and magnetic sub-members 12' in this embodiment form the mounting assembly 10 described above in context of Figure 3. Figure 13 also shows an electrical connector plug 20 engaged with the electrical connector socket 1.

Similar to what has been explained above, the mounting assembly 10 moves between the rest position and the coupling position as a consequence of the magnetic attraction force exerted between the magnetic sub-members 12' and the plug-side magnetic member 26 of the plug 20 shown in Figure 13. As a consequence, the connector pins 3 are either protruding through or hiding behind the front face 4 of the housing 2.

In order to provide radial guidance, the magnet holder 80 exhibits an opening 90 configured to receive locating pin 50 which in turn prevents the mounting assembly 10 from any other movement other than along the locating pin 50, which will be appreciated under consideration of Figure 13 which shows the socket 1 and plug 20 in an assembled and engaged state.

More or less magnetic sub-members 12' than shown in Figures 11 to 13 may be used in order to meet certain requirements in terms of the magnetic holding force. Alternatively or in addition to varying the number of magnetic sub-members 12', the individual magnetic sub-members 12' can also be arranged in two groups of different magnetic polarity. For example, in Figure 12, one of the magnetic sub-members 12' is shown to be oriented such that its magnetic south pole S sits in the magnet holder 80 in the assembled state, while its magnetic north pole sticks out. Assuming that the four remaining sub-members 12' exhibit the opposite polarity, the individual magnetic sub-members 12' would be arranged in the two groups of different polarity in a ratio of one to four. It was found to be preferable that the individual magnetic sub-members 12' are arranged in the two groups in a ratio of one to three.

Similar to the embodiment described in Figures 11 to 13, an embodiment of an electric plug 20 according to the invention includes a plug-side magnetic member 26 including a plurality of individual plug-side magnetic sub-members. The individual plug-side magnetic sub-members can be circumferentially arranged in the plug 20 similar to what is discussed in context of Figures 11 to 13 above. Also with reference to the above explanations, the individual plug-side magnetic sub-members can be arranged in two groups of different magnetic polarity, wherein the individual plug-side magnetic sub-members are advantageously arranged in the two groups in a ratio of one to three.

It has been found to be preferable to use an electrical connector socket 1 shown in Figure 11 having a plurality of individual magnetic sub-members 12' of differing polarity in combination with an electrical connector plug 20 the plug-side magnetic member 26 of which includes an annulus of ferromagnetic material, as shown in Figure 13.

## Claims

1. An electrical connector socket (1) comprising
a housing (2) having a front face (4) configured to mate with a corresponding face (24) of a corresponding plug (20);
a plurality of electrical connector pins (3) mounted on a mounting assembly (10) inside the housing (2), the mounting assembly (10) being movable in a direction substantially perpendicular to the front face (4);
wherein:
the mounting assembly (10) includes a magnetic member (12, 12') configured to interact with a corresponding plug-side magnetic member (26) of the plug (20) to establish a magnetic attraction force, to urge the movable mounting assembly (10) towards the front face (4) to a coupling position in which the connector pins (3) protrude through corresponding openings (7) in the front face (4);
the mounting assembly (10) further includes a resilient member (14) configured to exert a restoring force on the mounting assembly (10), to urge the mounting assembly (10) towards a rest position in which the connector pins (3) do not protrude from the front face (4), wherein the mounting assembly (10) includes a magnet holder (80) for mounting the magnetic member (12; 12');
**characterised by**:
the front face (4) having a locating pin (50), protruding from the front face (4), arranged in a centre portion of the front face and being configured to mechanically match with the plug (20); and
the magnet holder (80) having an opening, through which the locating pin (50) extends such that the mounting assembly (10) is movable relative to the locating pin (50).

2. An electrical connector socket (1) according to claim 1 wherein the front face further comprises a raised edge (5) which delimits a raised surface (6) and the locating pin (50) is located centrally of the raised surface (6).

3. An electrical connector socket (1) according to claim 1 or 2, wherein the magnetic member (12) and the resilient member (14) are configured such that the magnetic attraction force surmounts the restoring force when the plug (20) and the electrical connector socket (1) are coupled.

4. An electrical connector socket (1) according to any preceding claim, wherein the resilient member (14) includes a helical spring or a piece of foamy and/or rubber material, and wherein the locating pin (50) is substantially coaxially aligned in a centre portion of said helical spring (14) or substantially coaxially aligned in a bore portion of said piece of foamy and/or rubber material, respectively.

5. An electrical connector socket (1) according to any preceding claim, wherein the magnetic member (12) includes an annular magnet (12) or an annulus of ferromagnetic material substantially coaxially aligned with said resilient member (14), and/or wherein the magnetic member (12) includes a plurality of individual magnetic sub-members (12') circumferentially arranged in the magnet holder (80) around the opening in the magnet holder (80).

6. An electrical connector socket (1) according to any preceding claim, wherein each connector pin (3) protrudes through the front face (4) at a unique distance from the locating pin (50), and/or wherein the connector pins (3) are configured to establish electrical contact with corresponding contact areas of the plug (20).

7. An electrical connector socket (1) according to any preceding claim, wherein the mounting assembly (10) includes a printed circuit board (PCB) (16), preferably a finger flex thin PCB or a rigid PCB, and wherein the connector pins (3) are surface mount connector pins mounted to the PCB (16), preferably surface mount pogo pins.

8. An electrical coupling system comprising an electrical connector socket (1) according to any preceding claim and an electrical connector plug (20), wherein the electrical connector plug (20) comprises:
a plug housing (22) having a coupling face (24) configured to mate with the front face (4) of the electrical connector socket (1);
a plurality of electrical contact areas (23) distributed over the coupling face (24) and electrically isolated from each other, the electrical contact areas (23) being configured to establish electrical contact with corresponding connector pins (3) of the connector socket (1); and
a plug-side magnetic member (26) configured to interact with a corresponding magnetic member (12) of the socket (1) to establish a magnetic attraction force;
wherein the magnetic member (26) is located such that the magnetic attraction force urges the electrical contact areas (23) against the corresponding connector pins (3) of the connector socket (1), and wherein the coupling face (24) further includes a locating feature arranged in a centre portion of the coupling face (24) and configured to mechanically match with the locating pin (50) of the socket (1).

9. An electrical coupling system according to claim 8, wherein the locating feature includes a receiving means (60) in the plug-side coupling face (24), and/or wherein the locating feature includes a bore or recess extending through the plug-side coupling face (24) and includes an annular clip means (62).

10. An electrical coupling system according to claim 8 or 9, wherein the plug-side magnetic member (26) includes an annular magnet or an annulus of ferromagnetic material, and/or wherein each of the contact areas (23) has the shape of an annulus, and wherein the contact areas (23) are substantially concentrically arranged around the second locating means.

11. An electrical coupling system according to any of claims 8 to 10, wherein the connector plug (20) further includes a plug side printed circuit board (27) configured to be connected with a plug side conductor (40), the plug side printed circuit board (27) having at least one electric terminal electrically and individually coupled to at least one contact area (23) in order to establish electrical contact between the at least one contact area (23) and conductor strings of the plug side conductor (40).

## Patentansprüche

1. Elektrische Anschlussdose (1), umfassend
ein Gehäuse (2), das eine Frontfläche (4) aufweist, die dazu ausgelegt ist, mit einer entsprechenden Fläche (24) eines entsprechenden Steckers (20) zusammenzupassen;
eine Vielzahl elektrischer Anschlussstifte (3), die an einer Montageanordnung (10) innerhalb des Gehäuses (2) montiert sind, wobei die Montageanordnung (10) in einer Richtung beweglich ist, die im Wesentlichen senkrecht zu der Frontfläche (4) ist;
wobei:
die Montageanordnung (10) ein magnetisches Bauteil (12, 12') beinhaltet, das dazu ausgelegt ist, mit einem entsprechenden steckerseitigen magnetischen Bauteil (26) des Steckers (20) zusammenzuwirken, um eine magnetische Anziehungskraft herzustellen, um die bewegliche Montageanordnung (10) zu der Frontfläche (4) zu einer Kopplungsposition zu zwingen, in der die Anschlussstifte (3) durch entsprechende Öffnungen (7) in der Frontfläche (4) vorragen;
die Montageanordnung (10) weiter ein elastisches Bauteil (14) beinhaltet, das dazu ausgelegt ist, eine Rückstellkraft auf der Montageanordnung (10) auszuüben, um die Montageanordnung (10) in eine Ruheposition zu zwingen, in der die Anschlussstifte (3) nicht von der Frontfläche (4) vorragen, wobei die Montageanordnung (10) eine Magnethalterung (80) beinhaltet, um das magnetische Bauteil (12; 12') zu montieren;
**dadurch gekennzeichnet, dass**:
die Frontfläche (4) einen Ausrichtungsstift (50) aufweist, der von der Frontfläche (4) vorragt, der in einem Mittelabschnitt der Frontfläche angeordnet und dazu ausgelegt ist, sich mechanisch mit dem Stecker (20) zusammenzufügen; und
die Magnethalterung (80) eine Öffnung aufweist, durch die der Ausrichtungsstift (50) sich so erstreckt, dass die Montageanordnung (10) relativ zu dem Ausrichtungsstift (50) beweglich ist.

2. Elektrische Anschlussdose (1) nach Anspruch 1, wobei die Frontfläche weiter eine erhabene Kante (5) umfasst, die eine erhabene Oberfläche (6) begrenzt, und der Ausrichtungsstift (50) sich mittig der erhabenen Oberfläche (6) befindet.

3. Elektrische Anschlussdose (1) nach Anspruch 1 oder 2, wobei das magnetische Bauteil (12) und das elastische Bauteil (14) so ausgelegt sind, dass die magnetische Anziehungskraft die Rückstellkraft überwiegt, wenn der Stecker (20) und die elektrische Anschlussdose (1) verbunden sind.

4. Elektrische Anschlussdose (1) nach einem vorstehenden Anspruch, wobei das elastische Bauteil (14) eine Spiralfeder oder ein Stück aus schaumstoffartigem und/oder Gummimaterial beinhaltet, beziehungsweise wobei der Ausrichtungsstift (50) im Wesentlichen koaxial in einem Mittelabschnitt der Spiralfeder (14) ausgerichtet ist oder im Wesentlichen koaxial in einem Bohrungsabschnitt des Stücks aus schaumstoffartigem und/oder Gummimaterial ausgerichtet ist.

5. Elektrische Anschlussdose (1) nach einem vorstehenden Anspruch, wobei das magnetische Bauteil (12) einen ringförmigen Magneten (12) oder einen Ring aus ferromagnetischem Material beinhaltet, der im Wesentlichen koaxial mit dem elastischen Bauteil (14) ausgerichtet ist, und/oder wobei das magnetische Bauteil (12) eine Vielzahl individueller magnetischer Unterbauteile (12') beinhaltet, die umlaufend in der Magnethalterung (80) um die Öffnung in der Magnethalterung (80) angeordnet sind.

6. Elektrische Anschlussdose (1) nach einem vorstehenden Anspruch, wobei jeder Anschlussstift (3) durch die Frontfläche (4) mit einem einzigartigen Abstand von dem Ausrichtungsstift (50) vorragt und/oder wobei die Anschlussstifte (3) dazu ausgelegt sind, elektrischen Kontakt mit entsprechenden Kontaktbereichen des Steckers (20) herzustellen.

7. Elektrische Anschlussdose (1) nach einem vorstehenden Anspruch, wobei die Montageanordnung (10) eine Leiterplatte (PCB) (16) beinhaltet, bevorzugt eine dünne Fingerflex-PCB oder eine starre PCB, und wobei die Anschlussstifte (3) oberflächenmontierte Anschlussstifte sind, die auf der PCB (16) montiert werden, bevorzugt oberflächenmontierte Pogo-Stifte.

8. Elektrisches Verbindungssystem, das eine elektrische Anschlussdose (1) nach einem vorstehenden Anspruch und einen elektrischen Anschlussstecker (20) umfasst, wobei der elektrische Anschlussstecker (20) Folgendes umfasst:
ein Steckergehäuse (22), das eine Verbindungsfläche (24) aufweist, die dazu ausgelegt ist, mit der Frontfläche (4) der elektrischen Anschlussdose (1) zusammenzupassen;
eine Vielzahl elektrischer Kontaktbereiche (23), die über die Verbindungsfläche (24) verteilt und elektrisch voneinander isoliert sind, wobei die elektrischen Kontaktbereiche (23) dazu ausgelegt sind, elektrischen Kontakt mit entsprechenden Anschlussstiften (3) der Anschlussdose (1) herzustellen; und
ein steckerseitiges magnetisches Bauteil (26), das dazu ausgelegt ist, mit einem entsprechenden magnetischen Bauteil (12) der Dose (1) zusammenzuwirken, um eine magnetische Anziehungskraft herzustellen;
wobei das magnetische Bauteil (26) so liegt, dass die magnetische Anziehungskraft die elektrischen Kontaktbereiche (23) gegen die entsprechenden Anschlussstifte (3) der Anschlussdose (1) zwingt, und wobei die Verbindungsfläche (24) weiter ein Ausrichtungselement beinhaltet, das in einem Mittelabschnitt der Verbindungsfläche (24) angeordnet und dazu ausgelegt ist, mechanisch mit dem Ausrichtungsstift (50) der Dose (1) zusammenzupassen.

9. Elektrisches Verbindungssystem nach Anspruch 8, wobei das Ausrichtungselement ein Aufnahmemittel (60) in der steckerseitigen Verbindungsfläche (24) beinhaltet und/oder wobei das Ausrichtungselement eine Bohrung oder Vertiefung beinhaltet, die sich durch die steckerseitige Kopplungsfläche (24) erstreckt und ein ringförmiges Klemmmittel (62) beinhaltet.

10. Elektrisches Verbindungssystem nach Anspruch 8 oder 9, wobei das steckerseitige magnetische Bauteil (26) einen ringförmigen Magneten oder einen Ring aus ferromagnetischem Material beinhaltet, und/oder wobei jeder der Kontaktbereiche (23) die Form eines Rings aufweist, und wobei die Kontaktbereiche (23) im Wesentlichen konzentrisch um das zweite Ausrichtungsmittel angeordnet sind.

11. Elektrisches Verbindungssystem nach einem der Ansprüche 8 bis 10, wobei der Anschlussstecker (20) weiter eine steckerseitige Leiterplatte (27) beinhaltet, die dazu ausgelegt ist, an einen steckerseitigen Leiter (40) angeschlossen zu werden, wobei die steckerseitige Leiterplatte (27) mindestens eine elektrische Anschlussklemme aufweist, die elektrisch und einzeln mit mindestens einem Kontaktbereich (23) verbunden ist, um elektrischen Kontakt zwischen dem mindestens einen Kontaktbereich (23) und Leiterdrähten des steckerseitigen Leiters (40) herzustellen.

## Revendications

1. Prise de connexion électrique (1) comprenant
un boîtier (2) présentant une face avant (4) configurée pour s'insérer dans une face correspondante (24) d'une fiche correspondante (20) ;
une pluralité de broches de connexion électrique (3) montées sur un ensemble de montage (10) à l'intérieur du boîtier (2), l'ensemble de montage (10) étant mobile dans une direction sensiblement perpendiculaire à la face avant (4) ;
dans laquelle :
l'ensemble de montage (10) inclut un élément magnétique (12, 12') configuré pour interagir avec un élément magnétique correspondant côté prise (26) de la prise (20) afin d'établir une force d'attraction magnétique, pour pousser l'ensemble de montage mobile (10) vers la face avant (4) dans une position de couplage dans laquelle les broches de connexion (3) font saillie à travers des ouvertures correspondantes (7) dans la face avant (4) ;
l'ensemble de montage (10) inclut en outre un élément élastique (14) configuré pour exercer une force de rappel sur l'ensemble de montage (10), afin de pousser l'ensemble de montage (10) vers une position de repos dans laquelle les broches de connexion (3) ne dépassent pas de la face avant (4), dans lequel l'ensemble de montage (10) inclut un support d'aimant (80) pour le montage de l'élément magnétique (12 ; 12') ;
**caractérisé en ce que** :
la face avant (4) présentant une broche de positionnement (50), faisant saillie de la face avant (4), disposée dans une partie centrale de la face avant et étant configurée pour s'adapter mécaniquement à la prise (20) ; et
le support d'aimant (80) présentant une ouverture, à travers laquelle la broche de positionnement (50) s'étend de sorte que l'ensemble de montage (10) est mobile par rapport à la broche de positionnement (50).

2. Prise de connexion électrique (1) selon la revendication 1, dans laquelle la face avant comprend en outre un bord surélevé (5) qui délimite une surface surélevée (6) et la broche de positionnement (50) est située au centre de la surface surélevée (6).

3. Prise de connexion électrique (1) selon la revendication 1 ou 2, dans lequel l'élément magnétique (12) et l'élément élastique (14) sont configurés de telle sorte que la force d'attraction magnétique surpasse la force de rappel lorsque la fiche (20) et la prise de connexion électrique (1) sont accouplés.

4. Prise de connexion électrique (1) selon une quelconque revendication précédente, dans lequel l'élément élastique (14) inclut un ressort hélicoïdal ou un morceau de mousse et/ou de caoutchouc, et dans lequel la broche de positionnement (50) est sensiblement coaxiale dans une partie centrale dudit ressort hélicoïdal (14) ou sensiblement coaxiale dans une partie alésée dudit morceau de mousse et/ou de caoutchouc, respectivement.

5. Prise de connexion électrique (1) selon une quelconque revendication précédente, dans lequel l'élément magnétique (12) inclut un aimant annulaire (12) ou un anneau de matériau ferromagnétique sensiblement aligné coaxialement avec ledit élément élastique (14), et/ou dans lequel l'élément magnétique (12) inclut une pluralité de souséléments magnétiques individuels (12') disposés circonférentiellement dans le support d'aimant (80) autour de l'ouverture dans le support d'aimant (80).

6. Prise de connexion électrique (1) selon une quelconque revendication précédente, dans laquelle chaque broche de connexion (3) fait saillie à travers la face avant (4) à une distance unique de la broche de positionnement (50), et/ou dans laquelle les broches de connexion (3) sont configurées pour établir un contact électrique avec des zones de contact correspondantes de la fiche (20).

7. Prise de connexion électrique (1) selon une quelconque revendication précédente, dans lequel l'ensemble de montage (10) inclut une carte de circuit imprimé (PCB) (16), de préférence une PCB mince à flexion de doigt ou une PCB rigide, et dans lequel les broches de connexion (3) sont des broches de connexion à montage en surface montées sur la PCB (16), de préférence des broches pogo à montage en surface.

8. Système de couplage électrique comprenant une prise de connexion électrique (1) selon une quelconque revendication précédente et une fiche de connexion électrique (20), dans lequel la fiche de connexion électrique (20) comprend :
un boîtier de fiche (22) présentant une face d'accouplement (24) configurée pour s'accoupler avec la face avant (4) de la prise de connexion électrique (1) ;
une pluralité de zones de contact électrique (23) réparties sur la face de couplage (24) et isolées électriquement les unes des autres, les zones de contact électrique (23) étant configurées pour établir un contact électrique avec les broches de connexion correspondantes (3) de la prise de connexion (1) ; et
un élément magnétique côté fiche (26) configuré pour interagir avec un élément magnétique correspondant (12) de la prise (1) afin d'établir une force d'attraction magnétique ;
dans lequel l'élément magnétique (26) est situé de telle sorte que la force d'attraction magnétique pousse les zones de contact électrique (23) contre les broches de connexion correspondantes (3) de la prise de connexion (1), et dans lequel la face de couplage (24) inclut en outre une caractéristique de localisation disposée dans une partie centrale de la face de couplage (24) et configurée pour correspondre mécaniquement à la broche de localisation (50) de la prise (1).

9. Système de couplage électrique selon la revendication 8, dans lequel la caractéristique de localisation inclut un moyen de réception (60) dans la face de couplage côté fiche (24), et/ou dans lequel la caractéristique de localisation inclut un alésage ou un renfoncement s'étendant à travers la face de couplage côté fiche (24) et inclut un moyen d'agrafe annulaire (62).

10. Système de couplage électrique selon la revendication 8 ou 9, dans lequel l'élément magnétique côté fiche (26) inclut un aimant annulaire ou un anneau de matériau ferromagnétique, et/ou dans lequel chacune des zones de contact (23) présente la forme d'un anneau, et dans lequel les zones de contact (23) sont disposées de manière sensiblement concentrique autour du second moyen de localisation.

11. Système de couplage électrique selon l'une des revendications 8 à 10, dans lequel la fiche de connexion (20) inclut en outre une carte de circuit imprimé côté fiche (27) configurée pour être connectée à un conducteur côté fiche (40), la carte de circuit imprimé côté fiche (27) présentant au moins une borne électrique couplée électriquement et individuellement à au moins une zone de contact (23) afin d'établir un contact électrique entre la au moins une zone de contact (23) et les brins du conducteur côté fiche (40).
